# EUROPEAN PATENT SPECIFICATION

(11) **EP 3 174 789 B1**
(45) Date of publication and mention of the grant of the patent: **25.11.2020**
(21) Application number: 15745101.4
(22) Date of filing: 24.07.2015
(51) Int. Cl.: B64D 11/00, B64D 11/06

(54) **PASSENGER SUITE SEATING ARRANGEMENT WITH MOVEABLE VIDEO MONITOR**
SITZANORDNUNG MIT BEWEGLICHEM VIDEOMONITOR FÜR INSASSENRAUM
AGENCEMENT DE SIÈGE DE SALON POUR PASSAGERS COMPORTANT UN MONITEUR VIDÉO MOBILE

(30) Priority: 01.08.2014 US 201414449634
(43) Date of publication of application: 07.06.2017
(73) Proprietor: B/E Aerospace, Inc., Wellington, FL 33414 (US)
(72) Inventor: HENSHAW, Robert, J., Newnan, GA 30265 (US)
(74) Representative: Nony
(86) International application number: PCT/US2015/041876
(87) International publication number: WO 2016/018731

(56) References cited:
- GB-A- 2 362 095
- US-A1- 2013 248 655
- US-A1- 2014 035 330

## Description

### TECHNICAL FIELD AND BACKGROUND OF THE INVENTION

The present invention relates generally to premium class aircraft passenger seating arrangements and seat privacy, and more particularly, to a seating arrangement including laterally adjacent columns of alternating fore and aft facing suites, wherein video monitors and partitions are moveable to selectively provide privacy between suites or to permit conferencing between laterally and longitudinally adjacent suites.

Premium passenger seating arrangements in aircraft can take the form of individual suites separated and defined by privacy walls and partitions. Such suites typically include a passenger living area outfitted with comfort, luxury and convenience features such as lie-flat adjustable seats, desks, advanced media and electronics, closets and various storage compartments, among other amenities.

With the development of passenger suites, there is a continuing effort to offer more and better features and amenities to passengers to further accommodate their needs and increase the level of luxury of such suites. There is also a continuing effort to arrange suites to maximize seating density in an aircraft, maximize the use of limited space in the suites, and maintain the perceived openness of the suites. While passengers have come to expect certain amenities, the inclusion of amenities comes with additional cost, weight, complexity and space requirements. Such arrangements are described in US2014/035330, US2013/248655 or GB2362095.

Therefore, to meet the expectations of passengers while maximizing the use of space and minimizing complexity, provided herein are novel passenger seating arrangements and amenity configurations wherein amenities are arranged to serve multiple functions.

### BRIEF SUMMARY OF THE INVENTION

It is an object of the invention to provide a passenger suite seating arrangement that maximizes seating density and the use of space.

It is another object of the invention to provide a passenger suite seating arrangement that permits conferencing between passengers in laterally and longitudinally adjacent suites.

It is a further object of the invention to provide a passenger seating arrangement including suites that nest and share partition walls.

It is a further object of the invention to provide a passenger suite seating arrangement including one or more columns of alternating fore and aft facing suites.

It is a further object of the invention to provide suites having moveable partition walls that open to connect laterally adjacent suites.

It is a further object of the invention to provide suite amenities that serve multiple functions.

It is a further object of the invention to provide a video monitor configured to move left and right parallel to a passenger's viewing plane for privacy or to permit conferencing between passengers in adjacent suites.

It is a further object of the invention to provide a passenger suite seating arrangement including partitions and amenities configured to permit conferencing and line of sight between a passenger in a first suite, a second passenger in a second suite longitudinally adjacent the first suite, and third and fourth passengers in third and fourth suites.

To achieve the foregoing and other aspects and advantages, in one embodiment, A passenger suite seating .. arrangement as presented in independent claim 1 is provided.

According to another aspect of the invention, the third and fourth video monitors move between the stowed and deployed positions perpendicular to a viewing angle of a passenger seated in the respective third and fourth seats, and the first and second passenger suites share a desk positioned therebetween.

According to another aspect of the invention, the first and second seats are spaced apart by a lateral space that approximates a lateral space occupied by the third and fourth seats.

According to another aspect of the invention, first and second upright support structures are positioned in viewing position directly in front of the first and second seats and supporting the respective first and second video monitors.

According to another aspect of the invention, the first and second upright support structures include first and second cabinets that house the third and fourth video monitors in their respective stowed positions laterally offset from the viewing positions.

According to another aspect of the invention, each of the first, second, third and fourth passenger suites include a tray table deployable from a position directly forward and spaced apart from the respective seat to a position directly forward and over the respective seat.

According to another aspect of the invention, the first, the second, the third and the forth seats are lie-flat adjustable seats.

According to another aspect of the invention, the first and second passenger suites are divided by a shared console topped with a desk shared by the first and second passenger suites, the desk supports the first and second video monitors thereon.

According to another aspect of the invention, the partition walls positioned behind the first and second seats are sinusoidal shaped.

According to another aspect of the invention, a console is laterally positioned between the first and second seats and the third and fourth seats, and includes distally-positioned foot wells for use by occupants of respective first and second seats, and centrally-positioned foot wells for use by occupants of respective third and fourth seats.

Embodiments of the invention can include one or more or any combination of the above features and configurations.

Additional features, aspects and advantages of the invention will be set forth in the detailed description which follows, and in part will be readily apparent to those skilled in the art from that description or recognized by practicing the invention as described herein. It is to be understood that both the foregoing general description and the following detailed description present various embodiments of the invention, and are intended to provide an overview or framework for understanding the nature and character of the invention as it is claimed. The accompanying drawings are included to provide a further understanding of the invention, and are incorporated in and constitute a part of this specification.

### BRIEF DESCRIPTION OF THE DRAWINGS

Features, aspects and advantages of the present invention are understood when the following detailed description of the invention is read with reference to the accompanying drawings, in which:
FIG. 1 is an overhead perspective view of a passenger suite seating arrangement known from US 2014/0035330;
FIG. 2 is another overhead perspective view of the seating arrangement showing seat adjustability and deployable tray tables;
FIG. 3 is a perspective view of longitudinally adjacent suites shown with the moveable video monitor in a stowed position to allow facing passengers to see one another and converse;
FIG. 4 is a front perspective view of a portion of a column of suites showing the moveable video monitor in a deployed position to block the opening between facing suites;
FIG. 5 is a front perspective view of a portion of a column of suites showing the moveable video monitor in a stowed position to allow facing passengers to see one another and converse;
FIG. 6 is a perspective view of three adjacent suites showing the video monitor in a stowed position and the partition between laterally adjacent seats in a lowered position to open the suites to one another to allow passengers in the suites to communicate and see one another;
FIG. 7 is an overhead perspective view of a configuration according to an embodiment of the invention, wherein two pairs of oppositely facing passengers are provided with a suites that permits visual access for ease of communication;
FIG. 8 is an overhead perspective view perpendicular to the view of FIG. 7 showing the seating configuration of FIG. 7.
FIG. 9 is an overhead perspective view of the suite of FIG. 7 with video monitors deployed to permit viewing by the left hand seat occupants;
FIG. 10 is an overhead perspective view perpendicular to the view of FIG. 9 showing the seating configuration of FIG. 9; and
FIG. 11 is an overhead perspective view from a reverse direction relative to FIG. 10.

### DETAILED DESCRIPTION OF THE INVENTION

The present invention will now be described more fully hereinafter with reference to the accompanying drawings in which exemplary embodiments of the invention are shown. However, the invention may be embodied in many different forms and should not be construed as limited to the representative embodiments set forth herein. The exemplary embodiments are provided so that this disclosure will be both thorough and complete, and will fully convey the scope of the invention and enable one of ordinary skill in the art to make, use and practice the invention. Like reference numbers refer to like elements throughout the various drawings.

Referring to the figures, provided herein are various embodiments of passenger suite seating arrangements, for example, for installation within an aircraft or other conveyance. The term "suite" as used herein includes individual passenger living compartments or living spaces generally including adjustable seats, working surfaces, tray tables, video equipment, etc. Each suite may have its own entrance accessible from an aisle. Suites are divided and separated by one or more of partitions, shared structures, privacy walls, etc. Directions and offsets are generally described herein with reference to the longitudinal axis of the aircraft or conveyance, wherein the "longitudinal direction" is intended to be along the length of the aircraft and the "lateral" direction is intended to be in the direction perpendicular to the longitudinal axis of the aircraft.

As shown throughout the figure, the suites are arranged with their length parallel to the longitudinal axis of the aircraft, and thus parallel to the aisles. The suites may have a longer length than width to accommodate the length of a lie-flat adjustable seat when fully reclined to form a horizontal bed surface. As shown, the seats within the suites are arranged with their longitudinal axis generally parallel to the longitudinal axis of the aircraft. Suites may be arranged in any group including any number of suites. For example, suites may be arranged end-to-end to form columns of alternating fore and aft facing suites. Columns may flanked on either side by aisles, by an aisle on one side and a column of similar or dissimilar suites on the other side, or by columns on both sides so long as an entrance to each suite is provided. Suites may have varying lengths and widths to accommodate the furniture and amenities provided therein. Suites may also have varying heights depending on the available air space and degree of privacy desired. Although each suite is shown including only a single adjustable suite, it is envisioned that suites may include more than one seat and sized and shaped accordingly.

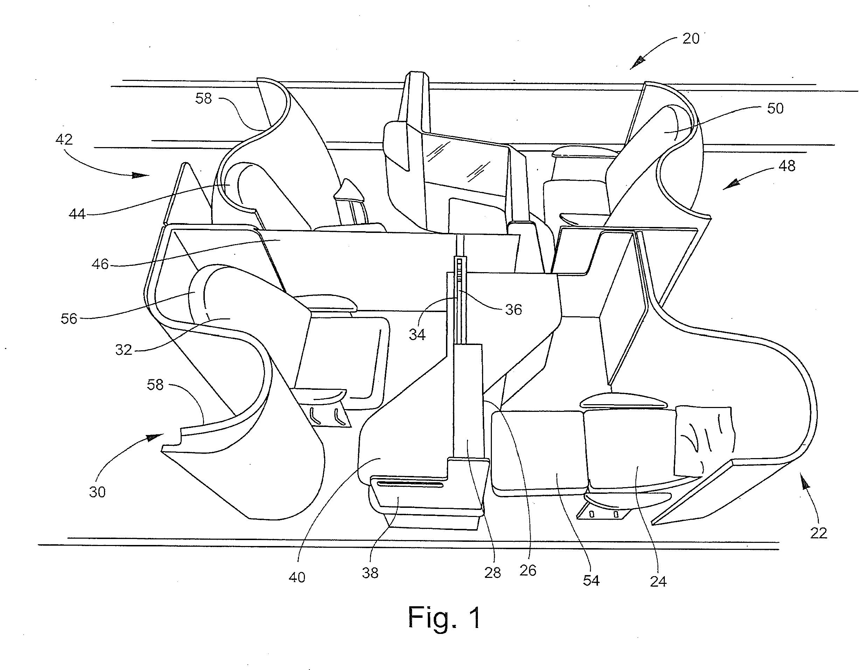

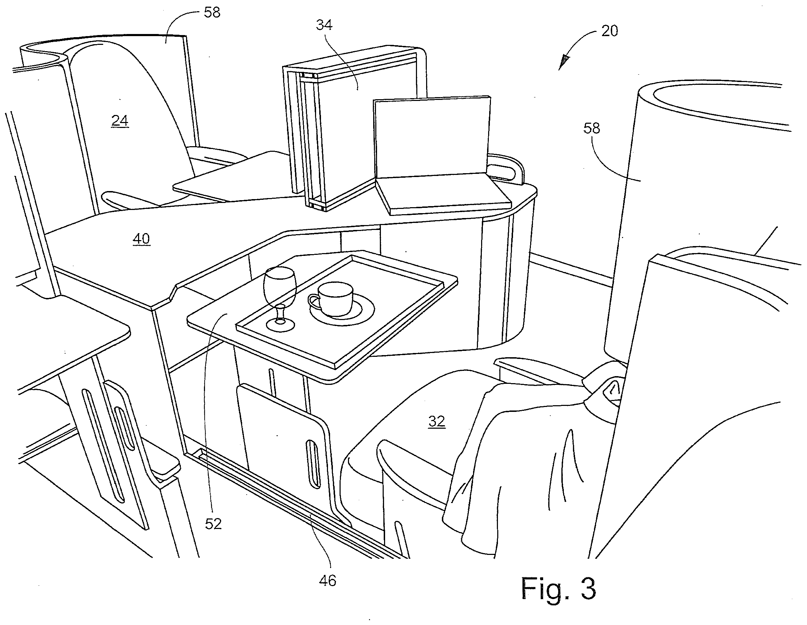

Referring to FIGS. 1-6, an embodiment of a premium class passenger seating arrangement disclosed by US 2014/0035330 is shown generally at reference numeral 20. The seating arrangement generally includes a plurality of passenger suites arranged into columns and rows. The seating arrangement includes a first passenger suite 22 including a first seat 24 and a first video monitor 26 fixed in position directly forward of the first seat 24. The first video monitor 26 may be an in-flight entertainment monitor and may be housed within a cabinet 28 or mounted to a supporting structure, for example a vertical wall. The first video monitor 26 is positioned directly forward of the first seat 24 to position the monitor at the optimum viewing angle for a passenger seated in the first seat 24. The first video monitor 26 may function to display in-flight movies, shows, informational messages and may link with a communications device supplied by the passenger or airline carrier.

The first seat 24, as well as the other seats disclosed herein, may be a fully adjustable seat configured to move between an upright position for taxi, take-off and landing, and a lie-flat position forming a horizontal bed. The seats disclosed herein generally include a seat back, a seat pan, a legrest and left and right armrests. "Inboard" seats are defined herein as seats spaced from the aisle, for example positioned along the interior wall of the suite. "Outboard" seats are defined herein as seats positioned adjacent the aisle. A "fore" or "forward" facing seat as defined herein faces in the direction of the cockpit, while an "aft" facing seat faces in the direction of the tail. Seats may be required to be in their upright position to permit ingress/egress to and from the suite, particularly in the case of outboard seats.

The seating arrangement further includes a second passenger suite 30 including a second seat 32 facing the first seat 24 and laterally offset relative thereto along a longitudinal axis of the first and second suites. The first and second seats 24, 32 thus face each other but are laterally offset. The second suite 30 includes a second video monitor 34 configured to move to selectively connect and divide the first and second suites. In other words, the second video monitor 34 is moveable from a first position laterally offset relative to the second seat 32, to a second position directly forward of the second seat 32. In a specific configuration, the second video monitor 34 is configured to selectively move left and right generally parallel to a viewing angle of a passenger seated in the second seat 32.

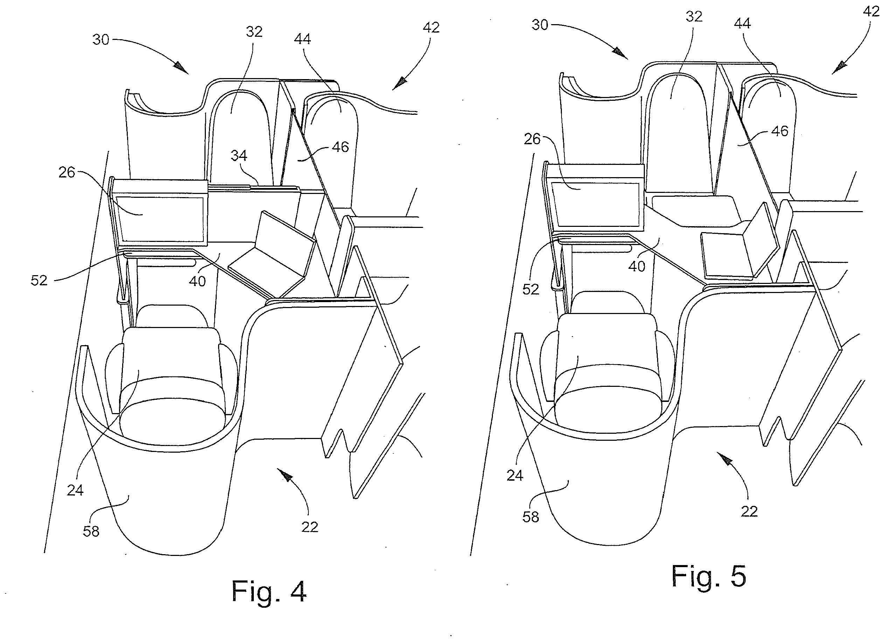

As best shown by a comparison between FIGS. 4 and 5, when the second video monitor 34 is in the first or "right" or "stowed" position, the passengers seated in the first and second seats 24, 32 are able to see one another (i.e., have line of sight) and can communicate or conference. In other words, when the second video monitor 34 is laterally offset relative to the second seat 32, a space between the first and second suites 22, 30 above the desk is left open, thus "connecting" the suites. When the second video monitor 34 is in the second, left or deployed position directly forward of the second seat 32, the optimum viewing angle for the monitor is provided to the passenger seated in the second seat 32 and the space between the first and second suites 22, 30 is closed off or blocked. This divides the suites, provides privacy between the suites and divides the working surface upon which the monitors are supported.

The first video monitor 26 is fixed in position. The second video monitor 34 is configured to selectively move left and right. Movement may be by way of sliding, such as along a track. The track may be mounted to the top surface of the supporting desk. The monitor may alternatively be hung from a track or cantilevered as easily achieved by one skilled in the art. In a preferred embodiment, the cabinet 28 housing the first video monitor 26 carries a track at the top thereof from which the second video monitor 34 is hung. The second video monitor 34 is attached to a portion of a bearing slide 36, such as a linear ball-bearing slide, roller bearing slide or progressive action slide that allows the second video monitor 34 to be drawn out horizontally and selectively positioned. The bearing slide 36 may include a mechanism to prevent the second video monitor 34 from accidentally being moved in either direction.

The first and second passenger suites 22, 30 are divided and separated by a shared console 38 that supports the monitors, defines footwells, supports working surfaces, defines compartments, etc. A desk 40 is positioned atop the console 38 and provides a flat, horizontal working surface for eating, supporting a computer, writing, etc. The desk 40 may be shared by both the first and second suites 22, 30 and may extend into portions of both suites. Each suite 22, 30 may also include its own desk. The desk 40 may be divided by the second video monitor 34 when the second video monitor is positioned directly forward of the second seat 32.

The seating arrangement 20 further includes a third passenger suite 42 arranged laterally adjacent the second passenger suite 30. The third passenger suite 42 includes a third seat 44 positioned adjacent the second seat 32. The second and third seats 32, 44 both face in the same direction.

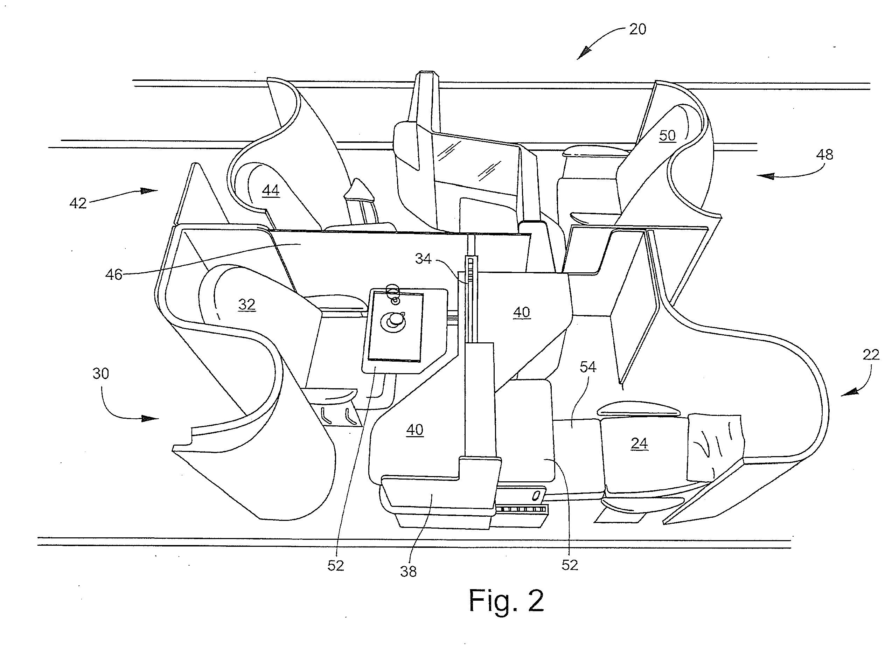

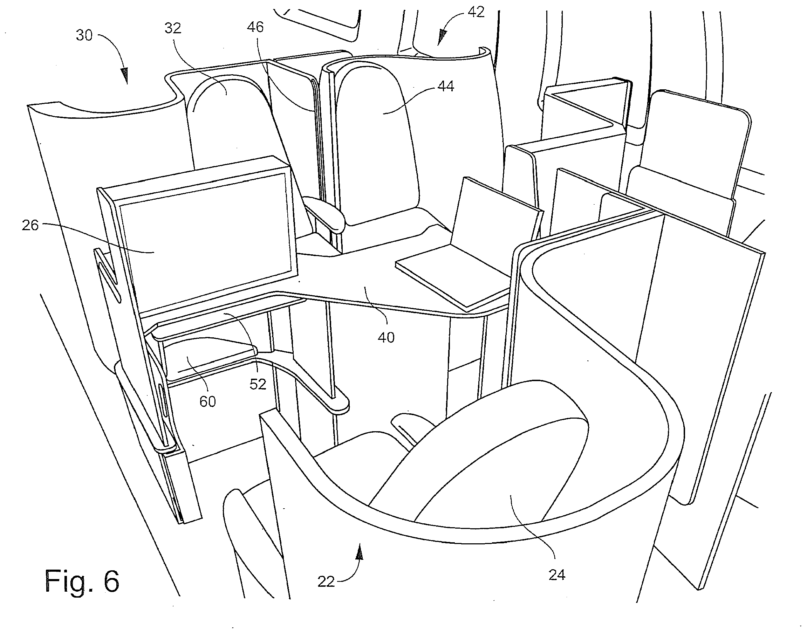

A moveable partition 46 is positioned between the second and third seats 32, 44. The partition 46 is configured to selectively move between a deployed position dividing the second and third passenger suites 30, 42 (see FIGS. 1 and 2), and a stowed position connecting the second and third passenger suites (see FIG. 6). The partition may raise and lower, or may slide to the left and right depending upon configuration of the partition, available space vertically below the partition, available space to either the left or right of the partition, among other factors.

As best shown in FIG. 6, stowing the partition opens the space between the second and third suites 30, 42 and allows conferencing and line of sight between passengers seated in the second and third suites 30, 42. When both the second video monitor 34 and the partition 46 are stowed, it is possible for the passengers seated in the first, second and third suites 22, 30 and 42 to see each other and communicate. In other words, line of sight is provided between passengers seated in the first, second and third seats 24, 32 and 44 when the second video monitor 34 is positioned laterally offset relative to the second seat 32 and the partition 46 between the second and third seats is stowed. Thus, conferencing is not only permitted between suites within the same column, but between suites within adjacent columns. Working surfaces may also be shaped and configured so that they can be shared between the passengers. Actuating the movement of the second video monitor 34 and the partition 46 may be done manually or automatically through a controller located in a suite control panel.

In a further embodiment, the seating arrangement may include a fourth passenger suite 48 facing the third passenger suite 42 and laterally adjacent the first passenger suite 22. The fourth passenger suite 48 includes a fourth seat 50. The first and second passenger suites 22, 30 are arranged to form a first column and the third and fourth passenger suites 42, 48 are arranged to form a second column laterally adjacent the first column. The first and fourth seats 24, 50 are outboard seats adjacent the aisles, and the second and third seats 32, 44 are inboard seats spaced apart from the aisles.

One or more of the first, second, third and fourth suites 22, 30, 42, 48 may include a tray table 52 deployable from a first position directly forward and spaced apart from its respective seat, to a second position directly forward and over its respective seat. The tray table 52 may deploy from beneath the desk 40, and may stow beneath the desk to permit egress from the seat. The tray table 52 can be configured to slide forward and backward relative to the seat along a track positioned to the side of the seat in the console 38. The tray table 52 can be adjustable vertically as well for maximum adjustability.

The seats described herein are preferably lie-flat adjustable seats wherein legrests 54 of the first and second seats 24, 32 laterally overlap along the longitudinal axis of the first and second passenger suites 22, 30 when the first and second seats are both in a lie-flat configuration. When the first seat 24 is in the lie-flat configuration, the respective legrest 54 (or the feet of the seat occupant) may extend underneath the desk 40 of the second passenger suite 30. When the second seat 32 is in the lie-flat configuration, the respective legrest 54 (or the feet of the seat occupant) may extend beneath the desk of the first passenger suite 22.

The first and second video monitors 26, 34 and their respective cabinets, as well as the partition walls dividing the suites, preferably extend vertically above a height of the seat back 56 in the upright seating position to provide privacy between suites. The partition walls 58 positioned behind the seats may be sinusoidal shaped to accommodate the long length of a reclined seat and shorter length of the space adjacent the seat. The partition or "privacy walls" may be shared between suites or suites may each include their own walls depending on the suite arrangement and suite positioned within the cabin. FIG. 1 includes two different exemplary arrangements of suite walls, with the suite wall of suite 30 extending in the direction of suite 42. Suite 42 includes a suite wall that curves around the seat 44.

Further features may include a shelf 60 positioned within each footwell that functions as an ottoman, providing power and media connections and associated cabling in the console, lighting, etc. Cabling associated with the second video monitor 34 may be positioned to the side of the monitor adjacent the aisle, and can be managed to prevent tangling during sliding movement.

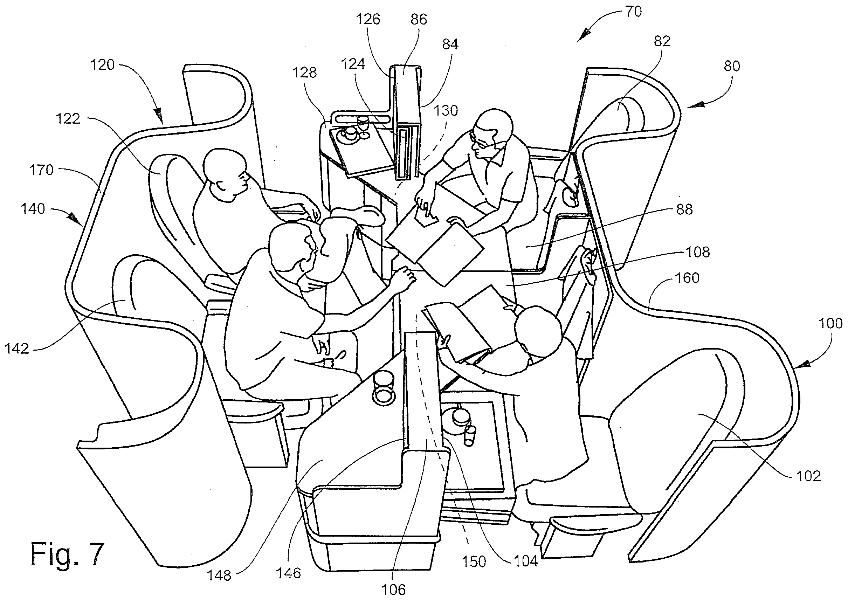

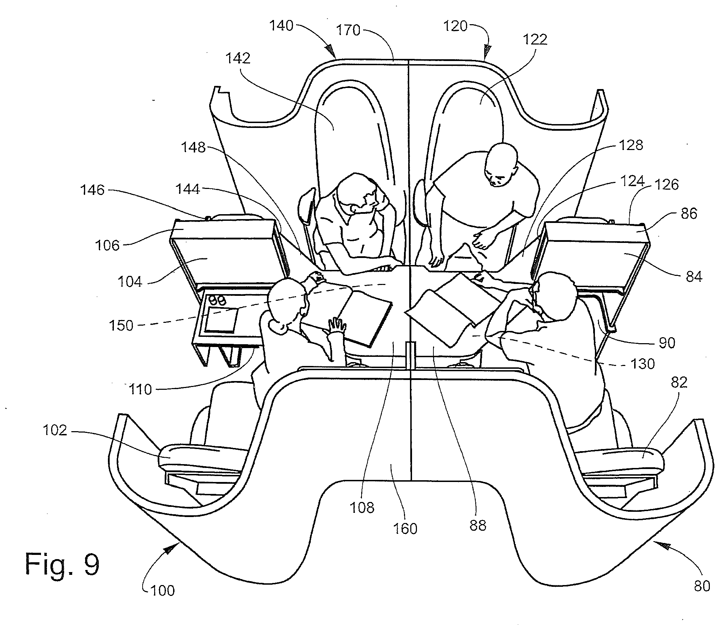

Referring now to FIGS. 7-11, a seating arrangement 70 according to an embodiment of the invention is disclosed. Reference is made to the above description with reference to FIGS. 1-6, where it will be observed that the same seating components and structures are disclosed as are found in FIGS. 7-11. In FIGS. 7-11 four suites 80, 100, 120 and 140 are shown. Suite 80 includes a seat 82 and a video monitor 84 fixed in position directly forward of the seat 82. The video monitor 84 may be an in-flight entertainment monitor and may be housed within a cabinet 86 or mounted to a supporting structure, for example a vertical wall. The video monitor 84 is positioned directly forward of the first seat 82 to position the monitor 84 at the optimum viewing angle for a passenger seated in the seat 82.

The seat 82, as well as the other seats disclosed herein, may be a fully adjustable seat configured to move between an upright position for taxi, take-off and landing, and a lie-flat position forming a horizontal bed. The suite 80 also includes a table assembly 88, as more specifically described above, that provides a work/dining surface for the occupant of seat 82 with a foot well 90 beneath the table 88 for use by the occupant of seat 122.

The passenger suite 100 includes a seat 102 adjacent the seat 82 so that the passengers seated in seats 82 and 102 are seated side-by-side and separated by a partition wall 160. The suite 100 includes a video monitor 104 positioned directly forward of the seat 102, preferably housed in a cabinet 106. A table assembly 108 provides a work/dining surface for the occupant of seat 102 with a foot well 110 beneath the table 108 for use by the occupant of seat 142.

The video monitors 84 and 104 are fixed in their respective positions forward of the seats 82, 102, respectively.

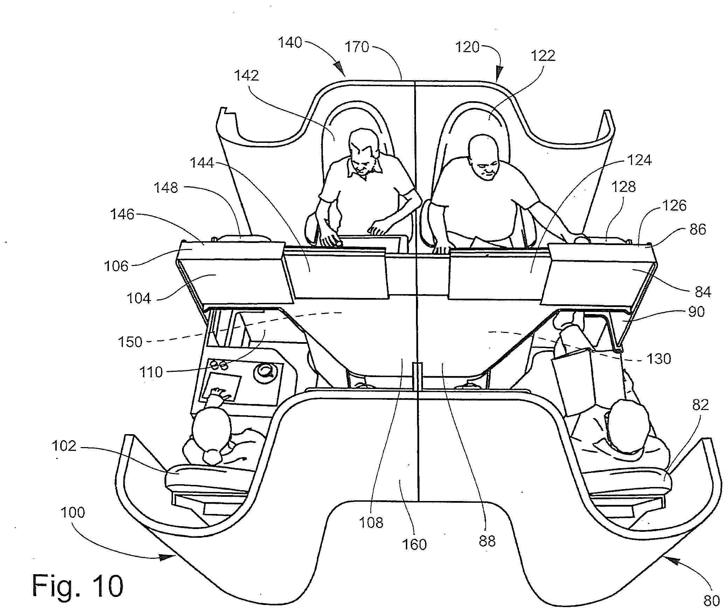

The suites 120 and 140 configured whereby they are more closely positioned relative to each other. This is accomplished by positioning the seats 122, 142 in a partition wall 170, which is the same shape as the partition wall 160, but with the seats 82, 102 positioned on an opposite side in separate, spaced-apart concavities. The suite 120 includes a video monitor 124 that is housed in a cabinet 126, which may be part of or separate from the cabinet 86. The video monitor 124 is positioned, as described above, to slide between a stowed position in the cabinet 126 and a deployed position directly in front of the seat 122 as shown in Figure 10. Suite 120 includes a table assembly 128 and a foot well 130 positioned under the table 88 of seat 82 for use by the occupant of seat 82.

The suite 140 includes a video monitor 144 that is housed in a cabinet 146, which may be part of or separate from the cabinet 106. The video monitor 144 is positioned, as described above, to slide between a stowed position in the cabinet 146 and a deployed position directly in front of the seat 142. Suite 140 includes a table assembly 148 and a foot well 150 positioned under the table 108 of seat 102 for use by the occupant of seat 102.

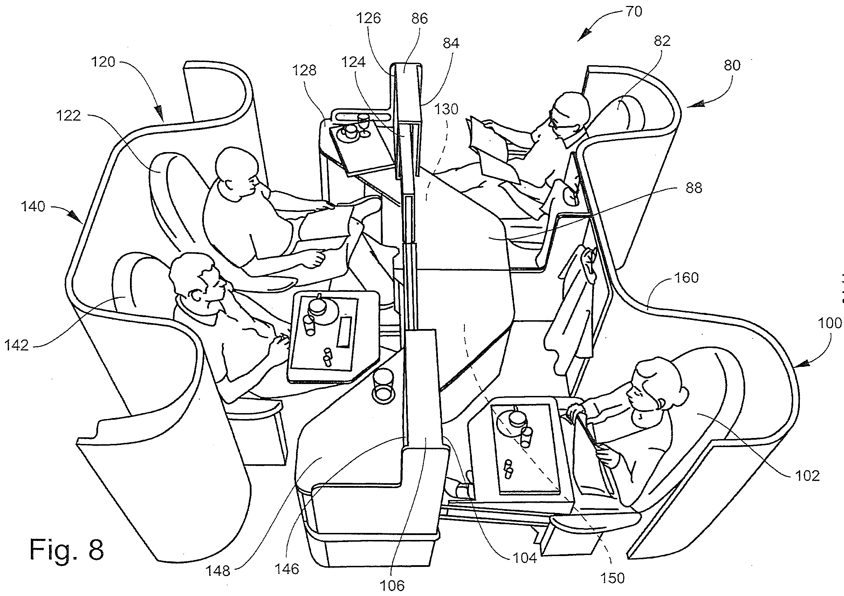

As is best shown in Figures 7 and 8, the configurations described above permit the four passengers seated in seats 82, 102, 122, and 142, respectively, to converse with unimpeded visual contact when desired by stowing the video monitors 124 and 144 in the cabinets 126 and 146. In this manner the video monitors 124 and 144 are out of the line of sight between the passengers.

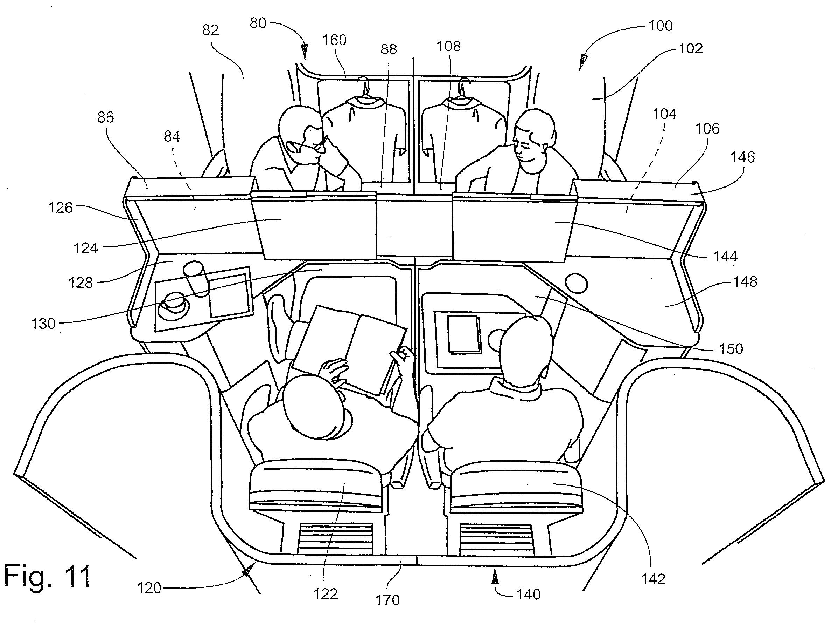

Conversely, if privacy is desired, the video monitors 124 and 144 are deployed to the position directly in front of the seats 122 and 142. As best shown in Figures 10 and 11, the deployed video monitors 124, 144 form vertical privacy panels that block visual contact between the occupants of seats 122, 142 with the occupants of seats 82, 102. As shown, an insert 172 may be positioned between the deployed monitors 124, 144, if needed, to fully block the space between the seats 122, 142 and 82, 102.

Note particularly the nestable configuration of the partition walls 160 and 170. Due to the symmetry provided by the shape of these elements, the configuration described above can be repeated indefinitely along the longitudinal axis of a passenger cabin by the placement of successive partition walls along its length. For example, as illustrated in Figure 10, two seats with the same spacing as seats 122, 142 can be placed in the concavity in the partition wall 160 between seats 82 and 102. In the same manner, two seats with the same spacing as seats 82 and 102 can be placed in the two spaced apart concavities that contain the seats 82 and 102.

The foregoing description provides embodiments of the invention by way of example only. It is envisioned that other embodiments may perform similar functions and/or achieve similar results. Any and all such equivalent embodiments and examples are within the scope of the present invention and are intended to be covered by the appended claims.

## Claims

1. A passenger suite seating arrangement (70), comprising:
(a) first and second passenger suites (80, 100) positioned side-by-side spaced apart and including respective first and second seats (82, 102);
(b) first and second video monitors (84, 104) respectively positioned in a fixed viewing position directly forward of the first seat and second seats (82, 102); and
(c) third and fourth passenger suites (120, 140) positioned side-by-side and including respective third and fourth seats (122, 142) arranged facing the first and second passenger suites (80, 100), **characterized in that** the passenger suite seating arrangement (70) further includes:
(d) respective third and fourth video monitors (124, 144) positioned and adapted to move between a stowed position laterally offset from a viewing position and a deployed viewing position forward of the third and fourth seats (122, 142), wherein in the deployed viewing position the third and fourth video monitors (124, 144) block visual contact between occupants of the first and second seats (82, 102) and the occupants of the third and fourth seats (122, 142), and wherein the first and second seats (82, 102) are spaced apart by a first partition wall (160) and the third and fourth seats (122, 142) are positioned together facing the first and second passenger suites; and
(e) wherein the first partition wall (160) has first and second spaced apart concavities for containing the respective first and second seats (82, 102) in spaced-part relation to each other, and a second partition wall (170) has a single central concavity facing the first partition wall and containing the third and fourth seats (122, 142) directly laterally adjacent one another without a partition wall therebetween, wherein the first and second partition walls (160, 170) have the same shape,
and wherein the third and fourth video monitors when both deployed meet at the longitudinal center of the grouping to divide the first and second suites from the third and fourth suites and stow without any partition wall therebetween to open the suites.

2. The seating arrangement (70) of claim 1, wherein the third and fourth video monitors (124, 144) move between the stowed and deployed positions perpendicular to a viewing angle of a passenger seated in the respective third and fourth seats (122, 142), and wherein the first and second passenger suites (80, 100) share a desk (108) positioned therebetween.

3. The seating arrangement (70) of claim 1, wherein the first and second seats (82, 102) are spaced apart by a lateral space that approximates a lateral space occupied by the third and fourth seats (122, 142).

4. The seating arrangement (70) of claim 1, and including first and second upright support structures (86, 106) positioned in viewing position directly in front of the first and second seats (82, 102) and supporting the respective first and second video monitors (84, 104).

5. The seating arrangement (70) of claim 4, wherein the first and second upright support structures (86, 106) include first and second cabinets (86, 106) that house the third and fourth video monitors (124, 144) in their respective stowed positions laterally offset from the viewing positions.

6. The seating arrangement (70) of claim 1, wherein each of the first, second, third and fourth passenger suites (80, 100, 120, 140) include a tray table (88) deployable from a position directly forward and spaced apart from the respective seat to a position directly forward and over the respective seat.

7. The seating arrangement (70) of claim 1, wherein the first, second, third and fourth seats (82, 102, 122, 142) are lie-flat adjustable seats.

8. The seating arrangement (70) of claim 1, wherein the first and second passenger suites (80, 100) are divided by a shared console topped with a desk (108) shared by the first and second passenger suites (80, 100), the desk (108) supporting the first and second video monitors (84, 104) thereon.

9. The seating arrangement (70) of claim 1, wherein the partition walls (160) positioned behind the first and second seats are sinusoidal shaped.

10. The seating arrangement (70) of claim 1, wherein a console is laterally positioned between the first and second seats (82, 102) and the third and fourth seats (122, 142), and includes first and second distally-positioned foot wells for use by occupants of the respective first and second seats (82, 102), and centrally-positioned third and fourth foot wells for use by occupants of the respective third and fourth seats (122, 142).

## Patentansprüche

1. Sitzanordnung (70) für Passagier-Suiten, umfassend:
(a) eine erste und eine zweite Passagier-Suite (80, 100) die nebeneinander in einem Abstand voneinander positioniert sind und einen ersten bzw. einen zweiten Sitz (82, 102) umfassen;
(b) einen ersten und einen zweiten Videobildschirm (84, 104), die jeweils in einer festen Betrachtungsposition unmittelbar vor dem ersten und dem zweiten Sitz (82, 102) positioniert sind; und
(c) eine dritte und eine vierte Passagier-Suite (120, 140), die nebeneinander positioniert sind und einen dritten bzw. einen vierten Sitz (122, 142) umfassen, die so angeordnet sind, dass sie der ersten und der zweiten Passagier-Suite (80, 100) gegenüberliegen, **dadurch gekennzeichnet, dass** die Sitzanordnung (70) für Passagier-Suiten ferner umfasst:
(d) einen dritten bzw. einen vierten Videobildschirm (124, 144), die positioniert und ausgelegt sind, um sich zwischen einer verstauten Position lateral versetzt von einer Betrachtungsposition und einer ausgefahrenen Betrachtungsposition vor dem dritten und dem vierten Sitz (122, 142) zu bewegen, wobei die ausgefahrene Betrachtungsposition des dritten und des vierten Videobildschirms (124, 144) den Sichtkontakt zwischen den Passagieren auf dem ersten und dem zweiten Sitz (82, 102) und den Passagieren auf dem dritten und dem vierten Sitz (122, 142) versperrt, und wobei der erste und der zweite Sitz (82, 102) durch eine erste Trennwand (160) voneinander beabstandet sind, und der dritte und der vierte Sitz (122, 142) so positioniert sind, dass sie der ersten und der zweiten Passagier-Suite zusammen gegenüberliegen; und
(e) wobei die erste Trennwand (160) eine erste und eine zweite Wölbung in einem Abstand voneinander zur Aufnahme des ersten bzw. des zweiten Sitzes (82, 102) in zueinander beabstandeter Beziehung aufweist, und eine zweite Trennwand (170) eine einzige mittige Wölbung aufweist, die der ersten Trennwand gegenüberliegt und den dritten und den vierten Sitz (122, 142) unmittelbar lateral benachbart zueinander ohne Trennwand dazwischen aufnimmt, wobei die erste und die zweite Trennwand (160, 170) die gleiche Form aufweisen,
und wobei der dritte und der vierte Bildschirm, wenn beide ausgefahren sind, in der Längsmitte der Gruppierung zusammentreffen, um die erste und die zweite Suite von der dritten und der vierten Suite zu trennen, und ohne jegliche Trennwand dazwischen verstaut werden, um dadurch die Suiten zu öffnen.

2. Sitzanordnung (70) nach Anspruch 1, wobei der dritte und der vierte Videobildschirm (124, 144) sich zwischen der verstauten und der ausgefahrenen Position senkrecht auf einen Betrachtungswinkel eines Passagiers bewegen, der auf dem dritten bzw. vierten Sitz (122, 142) sitzt, und wobei die erste und die zweite Passagier-Suite (80, 100) sich einen Tisch (108) teilen, der dazwischen positioniert ist.

3. Sitzanordnung (70) nach Anspruch 1, wobei der erste und der zweite Sitz (82, 102) durch einen lateralen Raum voneinander beabstandet sind, der annähernd einem lateralen Raum entspricht, der vom dritten und vierten Sitz (122, 142) eingenommen wird.

4. Sitzanordnung (70) nach Anspruch 1 und umfassend eine erste und eine zweite aufrecht stehende Tragstruktur (86, 106), die in Betrachtungsposition unmittelbar vor dem ersten und dem zweiten Sitz (82, 102) positioniert sind und den ersten bzw. den zweiten Videobildschirm (84, 104) tragen.

5. Sitzanordnung (70) nach Anspruch 4, wobei die erste und die zweite aufrecht stehende Tragstruktur (86, 106) ein erstes und ein zweites Gehäuse (86, 106) umfassen, die den dritten und den vierten Videobildschirm (124, 144) in ihren jeweiligen verstauten Positionen lateral versetzt von den Betrachtungspositionen beherbergen.

6. Sitzanordnung (70) nach Anspruch 1, wobei jede der ersten, der zweiten, der dritten und der vierten Passagier-Suite (80, 100, 120, 140) einen Ablagetisch (88) umfasst, der von einer Position unmittelbar vor dem jeweiligen Sitz und beabstandet davon in eine Position unmittelbar vor und über dem jeweiligen Sitz ausgefahren werden kann.

7. Sitzanordnung (70) nach Anspruch 1, wobei der erste, der zweite, der dritte und der vierte Sitz (82, 102, 122, 142) verstellbare Liegesitze sind.

8. Sitzanordnung (70) nach Anspruch 1, wobei die erste und die zweite Passagier-Suite (80, 100) durch eine gemeinsame Konsole mit einem Tisch darauf (108) getrennt sind, den sich die erste und die zweite Passagier-Suite (80, 100) teilen, wobei der Tisch (108) den ersten und den zweiten Videobildschirm (84, 104) darauf trägt.

9. Sitzanordnung (70) nach Anspruch 1, wobei die Trennwände (160), die hinter dem ersten und dem zweiten Sitz positioniert sind, sinusförmig sind.

10. Sitzanordnung (70) nach Anspruch 1, wobei eine Konsole lateral zwischen dem ersten und dem zweiten Sitz (82, 102) sowie dem dritten und dem vierten Sitz (122, 142) positioniert ist und einen ersten und einen zweiten distal positionierten Fußraum zur Verwendung durch Passagiere auf dem ersten bzw. dem zweiten Sitz (82, 102) und einen dritten und einen vierten zentral positionierten Fußraum zur Verwendung durch Passagiere auf dem dritten bzw. dem vierten Sitz (122, 142) umfasst.

## Revendications

1. Agencement de sièges de salon pour passager (70), comprenant :
(a) des premier et deuxième salons pour passager (80, 100) positionnés côte à côte, espacés l'un de l'autre et comprenant respectivement des premier et deuxième sièges (82, 102) ;
(b) des premier et deuxième moniteurs vidéo (84, 104) respectivement positionnés dans une position de visualisation fixe directement devant les premier et deuxième sièges (82, 102) ; et
(c) des troisième et quatrième salons pour passager (120, 140) positionnés côte à côte et comprenant des troisième et quatrième sièges respectifs (122, 142) disposés face aux premier et deuxième salons pour passager (80, 100), **caractérisé en ce que** l'agencement de sièges des salons pour passager (70) comprend en outre :
(d) des troisième et quatrième moniteurs vidéo respectifs (124, 144) positionnés et adaptés pour se déplacer entre une position rangée décalée latéralement par rapport à une position de visualisation et une position de visualisation déployée en avant des troisième et quatrième sièges (122, 142), dans la position de visualisation déployée, les troisième et quatrième moniteurs vidéo (124, 144) bloquant le contact visuel entre les occupants des premier et deuxième sièges (82, 102) et les occupants des troisième et quatrième sièges (122, 142), et les premier et deuxième sièges (82, 102) étant espacés par une première paroi de séparation (160) et les troisième et quatrième sièges (122, 142) étant positionnés ensemble face aux premier et deuxième salons pour passager ; et
(e) la première paroi de séparation (160) ayant des première et deuxième concavités espacées l'une de l'autre pour contenir les premier et deuxième sièges respectifs (82, 102) en relation espacée l'un par rapport à l'autre, et une deuxième paroi de séparation (170) ayant une seule concavité centrale faisant face à la première paroi de séparation, et contenir les troisième et quatrième sièges (122, 142) directement adjacents latéralement sans cloison entre eux, la première et la deuxième cloison (160, 170) ayant la même forme,
et les troisième et quatrième moniteurs vidéo, lorsqu'ils sont tous deux déployés, se rejoignant au centre longitudinal du groupement pour séparer les premier et deuxième salons des troisième et quatrième salons et se rangeant sans aucune cloison entre eux pour ouvrir les salons.

2. Agencement de sièges (70) selon la revendication 1, les troisième et quatrième moniteurs vidéo (124, 144) se déplaçant entre les positions rangées et déployées perpendiculairement à un angle de vision d'un passager assis dans les troisième et quatrième sièges respectifs (122, 142), et les premier et deuxième salons pour passager (80, 100) partageant un bureau (108) positionné entre eux.

3. Agencement de sièges (70) selon la revendication 1, les premier et deuxième sièges (82, 102) étant espacés par un espace latéral qui se rapproche d'un espace latéral occupé par les troisième et quatrième sièges (122, 142) .

4. Agencement de sièges (70) selon la revendication 1, et comprenant des première et deuxième structures de support verticales (86, 106) positionnées en position de visionnement directement devant les premier et deuxième sièges (82, 102) et supportant les premier et deuxième moniteurs vidéo respectifs (84, 104).

5. Agencement de sièges (70) selon la revendication 4, les première et deuxième structures de support verticales (86, 106) comprenant des premier et deuxième placards (86, 106) qui abritent les troisième et quatrième moniteurs vidéo (124, 144) dans leurs positions de rangement respectives décalées latéralement par rapport aux positions de visionnement.

6. Agencement de sièges (70) selon la revendication 1, chacun des premier, deuxième, troisième et quatrième salons pour passager (80, 100, 120, 140) comprenant une tablette (88) pouvant être déployée d'une position directement en avant et espacée du siège respectif à une position directement en avant et au-dessus du siège respectif.

7. Agencement de sièges (70) selon la revendication 1, les premier, deuxième, troisième et quatrième sièges (82, 102, 122, 142) étant des sièges réglables à plat.

8. Agencement de sièges (70) selon la revendication 1, les premier et deuxième salons pour passager (80, 100) étant divisés par une console commune surmontée d'un bureau (108) partagé par les premier et deuxième salons pour passager (80, 100), le bureau (108) supportant les premier et deuxième moniteurs vidéo (84, 104).

9. Agencement de sièges (70) selon la revendication 1, les cloisons de séparation (160) positionnées derrière les premier et deuxième sièges étant de forme sinusoïdale.

10. Agencement de sièges (70) selon la revendication 1, une console étant positionnée latéralement entre les premier et deuxième sièges (82, 102) et les troisième et quatrième sièges (122, 142), et comprenant des premier et deuxième espaces pour les pieds positionnés distalement pour être utilisés par les occupants des premier et deuxième sièges respectifs (82, 102), et des troisième et quatrième espaces pour les pieds positionnés centralement pour être utilisés par les occupants des troisième et quatrième sièges respectifs (122, 142).
